# FASCICULE DE BREVET EUROPEEN

(11) **EP 1 608 705 B1**
(45) Date de publication et mention de la délivrance du brevet: **06.12.2006**
(21) Numéro de dépôt: 04742318.1
(22) Date de dépôt: 23.03.2004
(51) Int. Cl.: C08L 83/04, C08L 83/06, H01B 1/12

(54) **COMPOSITION RETICULABLE POUR ELECTROLYTE DE BATTERIE**
HÄRTBARE ZUSAMMENSETZUNG FÜR EINEN BATTERIEELEKTROLYT
SETTING COMPOSITION FOR A BATTERY ELECTROLYTE

(30) Priorité: 03.04.2003 FR 0304153
(43) Date de publication de la demande: 28.12.2005
(73) Titulaire: RHODIA CHIMIE, 92512 Boulogne-Billancourt (FR)
(72) Inventeur: BARRANDON, Georges, F-69440 MORNANT (FR); GEORGE, Catherine, F-69290 SAINT GENIS LES OLLIERES (FR); VERGELATI, Carroll, F-38118 SAINT BAUDILLE DE LA TOUR (FR); GIRAUD, Yves, F-69110 SAINTE FOY LES LYON (FR)
(74) Mandataire: Trolliet, Maurice
(86) Numéro de dépôt international: PCT/FR2004/000708
(87) Numéro de publication internationale: WO 2004/090037

(56) Documents cités:
- US-A- 4 322 518
- US-A- 5 548 055
- US-A1- 2002 051 911

## Description

Le domaine de la présente invention concerne le domaine des batteries et des électrolytes polymères pour batteries et plus particulièrement le domaine des batteries au lithium.

Plus précisément, la présente invention a pour objet une nouvelle composition polymérisable et/ou réticulable pour électrolyte de batterie, un nouvel électrolyte polymère obtenu par polymérisation et/ou réticulation de cette nouvelle composition ainsi qu'une nouvelle batterie polymère.

Historiquement, les batteries au plomb ont été les plus couramment utilisées. Cependant, la technologie au plomb avait de nombreux inconvénients liés au poids des batteries, à la fragilité en cours de fonctionnement ainsi qu'à l'utilisation d'un liquide corrosif. Ceci a conduit au développement de batteries alcalines dont les électrodes étaient soit à base de nickel et de cadmium (batteries nickel-cadmium), soit à base d'oxyde de nickel et de zinc (batteries zinc-nickel), soit à base d'oxyde d'argent couplé à du zinc, du cadmium ou du fer (batteries à l'oxyde d'argent). Toutes ces technologies utilisent une solution de potasse comme électrolyte et présentent comme inconvénient majeur une densité d'énergie massique faible au regard des besoins liés au développement des équipements portables. C'est ainsi que les fabricants ont développés une nouvelle filière basée sur des batteries au lithium utilisant une électrode négative à base de lithium métallique (d'où l'appellation batterie « lithium-métal »). Cependant, les problèmes liés à une mauvaise reconstitution de l'électrode négative de lithium au cours des charges successives a vite débouchés sur un nouveau type d'électrode négative à base de carbone, utilisé comme composé d'insertion du lithium (d'où l'appellation batterie « lithium-ion »).

Pour les batteries au lithium, le principe de fonctionnement se résume de la manière suivante :
Au cours de la charge électrochimique, les ions de métal de transition du matériau d'électrode positive sont oxydés, ce qui induit la désintercalation du lithium. La circulation des électrons est imposée dans le circuit extérieur et une quantité équivalente molaire d'ions lithium traversent l'électrolyte qui est un conducteur ionique et isolant électronique. Ceci permet l'intercalation du lithium à l'électrode négative. Lors de la décharge de la batterie, c'est-à-dire en cours d'utilisation, c'est le phénomène inverse qui s'opère spontanément.
Dans les batteries, le conducteur ionique ou électrolyte, qui sépare les électrodes, est un élément clé. D'une part, son état, liquide, solide ou gélifié affecte la sûreté du système et d'autre part, sa conductivité détermine la gamme de température de fonctionnement. Des électrolytes liquides à base de carbonates sont couramment utilisés. Cependant, ils ne présentent pas les conditions optimums de sécurité liées à la manipulation d'un liquide corrosif. En effet, ce type de batterie peut-être le siège d'incidents tels qu'un emballement thermique conduisant à la formation de gaz, augmentant ainsi la pression interne de la batterie et le risque d'explosion. C'est pour cette raison que des normes strictes de sécurité imposent aux fabricants l'usage de boîtiers sophistiqués, augmentant ainsi le prix de revient d'une unité.

Afin de palier à cet inconvénient majeur, l'industrie des batteries a développé une nouvelle technologie basée sur des électrolytes polymères solides à anode de lithium, d'où l'appellation de « batterie lithium-polymère ».

Du fait de son caractère solide et sous forme de film, ce nouveau type d'électrolyte permet le développement de batterie plus sûre et ayant une grande variété de formes. La faible épaisseur des films constitués permet une augmentation du rendement énergétique à faible densité de courant. L'un des premiers « polymères secs » étudié a été le polyoxyéthylène pour des applications de transport. Cependant, l'un des inconvénients de ce type de polymère est lié à une faible conductivité pour une utilisation à température ambiante et à fortiori aux basses températures. C'est donc un des inconvénients majeurs qui devient critique pour une utilisation de ces batteries dans des conditions extrêmes comme par exemple pour les batteries de satellites géostationnaires en cours de fonctionnement dans l'espace.

Les professionnels concernés ont donc cherché à mettre au point de nouveaux électrolytes polymères. A titre illustratif, la demande international WO2000/25323 décrit une composition réticulable pour former un électrolytes polymère de batterie comprenant un polysiloxane constitué de groupements polyoxyéthylènes ou de groupements carbonates cycliques ayant au moins deux SiH réactifs, un réticulant ayant au moins deux groupements réactifs de type alcényle, un catalyseur d'hydrosilylation et un sel électrolyte. Cette composition est réticulée thermiquement par chauffage entre 70 et 100°C pendant une durée d'environ 6 heures pour obtenir un polymère électrolyte. Les inconvénients majeurs de ce type de préparation sont liés au prix de revient élevé des matières premières, notamment dans le cas des huiles vinylées associées à des huiles à fonctions SiH ce qui est un frein à une application industrielle.

Les industries du domaine technique considéré sont donc dans l'attente de nouvelles compositions pour électrolyte de batterie permettant d'obtenir des polymères électrolytes ayant des niveaux suffisants de conductivité dans une gamme de température adaptée allant de -20° à +80°C et des électrolytes polymères utilisant des matières premières à prix de revient le plus bas possible.

L'objectif principal de la présente invention est donc de proposer une nouvelle composition polymérisable et/ou réticulable pour électrolyte polymère de batterie permettant d'obtenir des polymères électrolytes ayant des niveaux suffisants de conductivité pour une utilisation dans une gamme de température adaptée allant de -20° à +80°C.

Un autre objectif de la présente invention est de fournir de nouvelles compositions pour électrolyte polymère de batterie polymérisable et/ou réticulable dont les composants sont des matières premières à prix de revient le plus bas possible, en l'occurrence à des prix de revient inférieurs aux compositions de l'art antérieur utilisant des compositions à base d'huiles vinylées associées à des huiles à fonctions SiH.

L'invention vise également l'obtention d'un électrolyte polymère solide par polymérisation et/ou réticulation de la composition selon l'invention.

L'invention a aussi pour but de fournir une batterie polymère et plus particulièrement une batterie lithium polymère.

Ces objectifs parmi d'autres sont atteints par la présente invention qui concerne une composition polymérisable et/ou réticulable par déshydrogéno-condensation pour électrolyte de batterie comprenant :
a) au moins un organohydrogénopolysiloxane (POS) (A) ayant, par molécule, au moins 2 atomes d'hydrogène directement liés aux atomes de silicium ;
b) au moins un organohydroxypolysiloxane (POS) (B) ayant, par molécule, au moins 2 groupements -OH directement liés aux atomes de silicium ;
c) une quantité efficace d'au moins un catalyseur de déshydrogéno-condensation (C) ; et
d) au moins un sel électrolyte (D) ;
   avec comme condition supplémentaire que le POS (A) et/ou le POS (B) comporte(nt) par molécule au moins un motifs siloxyle comprenant au moins un groupement directement lié à un atome de silicium comprenant une fonction éther de polyoxyalkylène (Poa).

Selon une première variante, l'invention concerne une composition polymérisable et/ou réticulable par déshydrogéno-condensation pour électrolyte de batterie comprenant :
a) au moins un organohydrogénopolysiloxane (POS) (A) ayant, par molécule, au moins 2 atomes d'hydrogène directement liés aux atomes de silicium et au moins un groupement directement lié à un atome de silicium comprenant une fonction éther de polyoxyalkylène (Poa);
b) au moins un organohydroxypolysiloxane (POS) (B) ayant, par molécule, au moins 2 groupements -OH directement liés aux atomes de silicium,
c) une quantité efficace d'au moins un catalyseur de déshydrogéno-condensation (C) ; et
d) au moins un sel électrolyte (D).

L'expression « composition polymérisable et/ou réticulable par déshydrogéno-condensation » signifie que la composition selon l'invention a une aptitude à polymériser et/ou réticuler par une réaction de déshydrogéno-condensation. Les motifs réactifs concernés de la composition sont d'une part les polyorganosiloxanes (ou POS) à motifs SiH et d'autre part les POS à motifs SiOH. La déshydrogéno-condensation entre ces motifs réactifs silicones conduit à la formation de liaisons ≡Si-O-Si≡ conduisant à la formation de réseaux et à la libération d'hydrogène gazeux.

De manière préférée, la fonction éther de polyoxyalkylène (Poa) du (POS) (A) est de type éther de polyoxyéthylène et/ou éther de polyoxypropylène.

Plus particulièrement, le (POS) (A) est un copolymère essentiellement linéaire statistique, séquencé ou à bloc, de formule générale moyenne (I) suivante : 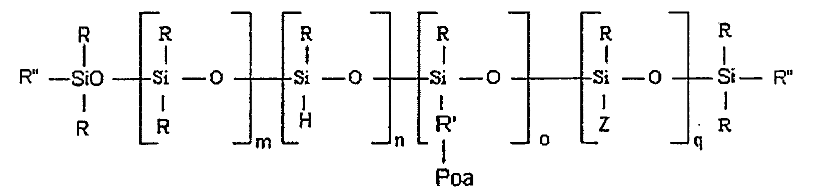 et pouvant éventuellement comporter des motifs de formule RSiO_{3/2} (T) (le % de motifs T maximum sera déterminé de manière à ce que la composition reste sous une forme liquide),
formule dans laquelle :
- les symboles R', identiques ou différents entre eux, représentent chacun un radical comprenant de 2 à 50 atomes de carbone ;
- les symboles R et R", identiques ou différents entre eux, représentent chacun :
   - un hydrogène, un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
   - un radical cycloalkyle contenant entre 5 et 8 atomes de carbone cycliques, éventuellement substitué,
   - un radical aryle contenant entre 6 et 12 atomes de carbone, éventuellement substitué, ou
   - une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alcoxyles contenant 1 à 3 atomes de carbone,
- les symboles Z, identiques ou différents entre eux, représentent chacun un radical hydroxyle ou alkoxyle,
- les symboles Poa, identiques ou différents entre eux, représentent chacun des groupements de type éther de polyoxyalkylène, de préférence éther de polyoxyéthylène et/ou éther de polyoxypropylène;
- m est un nombre entier ou fractionnaire supérieur ou égal à 0 ;
- n est un nombre entier ou fractionnaire supérieur ou égal à 2 et éventuellement peut-être égal à 0 avec comme condition que lorsque n est égal à 0 alors les deux groupements R" sont des atomes d'hydrogène ;
- o est un nombre entier ou fractionnaire supérieur ou égal à 1, et
- q est un nombre entier ou fractionnaire supérieur ou égal à 0.

De manière préférentielle, m et n sont compris entre 2 et 200 ; o est compris entre 1 et 50 et q est compris entre 0 et 10.

En particulier, les groupements éther de polyoxyalkylène (-R'-Poa) sont choisis parmi les groupements suivants :

-(CH₂)₃-O-(CH₂CH₂-O)ₘ-CH₃ ; -(CH₂)₂-O-(CH₂CH₂-O)ₘ-CH₃ ;

-(CH₂)₃-O-(CH(CH₃)-CH₂-O)ₘ-CH₃ et -(CH₂)₂-O-(CH(CH₃)-CH₂-O)ₘ-CH₃,

avec m≤14 et de préférence compris entre 5 et 12, de préférence compris entre 5 et 14 et encore plus préférentiellement égal à 6.

Selon un mode particulier, le (POS) (B) est un copolymère essentiellement linéaire statistique, séquencé ou à bloc, de formule générale moyenne (II) suivante : 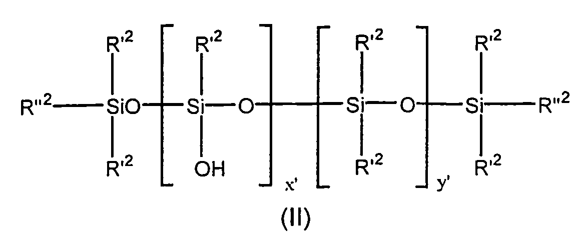 et pouvant éventuellement comporter des motifs de formule RSiO_{3/2} (T), formule dans laquelle :
- x' est un nombre entier ou fractionnaire supérieur ou égal à 2 et pouvant éventuellement être égal à 0 ; préférentiellement compris entre 2 et 200 et encore plus préférentiellement compris entre 2 et 50.
- y' est un nombre entier ou fractionnaire variant entre 0 et 200 ; préférentiellement entre 1 et 200 et encore plus préférentiellement entre 1 et 50.
- les symboles R'² et R''², identiques ou différents entre eux, représentent chacun:
   · un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
   · un radical cycloalkyle contenant entre 5 et 8 atomes de carbone cycliques, éventuellement substitué,
   · un radical aryle contenant entre 6 et 12 atomes de carbone éventuellement substitué, et/ou
   · une partie aralkyle ayant une partie alkyle contenant entre 5 et 14 atomes de carbone et une partie aryle contenant entre 6 et 12 atomes de carbone, substituée éventuellement sur la partie aryle, avec comme condition que lorsque x' = 0 alors les deux groupements R"² correspondent à -OH.

De préférence, au moins 80 % en nombre des groupes R'² sont des groupes méthyles liés directement aux atomes de silicium. Dans le cadre de la présente invention, on préfère plus spécialement utiliser les POS (B) de type α,ω-bis (hydroxy)polydiméthylsiloxane de formule générale moyenne (III) suivante : 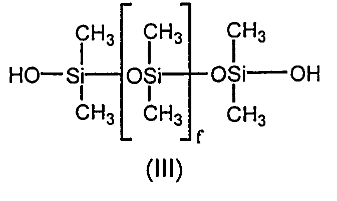 avec f supérieur ou égal à 0, de préférence 0 ≤ f ≤ 200 et de préférence 0≤f≤10.

Par quantité efficace d'au moins un catalyseur de déshydrogéno-condensation (C), on entend, au sens de l'invention, la quantité suffisante pour amorcer la polymérisation ou réticulation. Cette quantité doit être la plus faible possible afin de permettre une meilleure conservation dans le temps de la composition. Des concentrations utiles en catalyseur se situent entre 1.10⁻⁶ et 5, de préférence entre 1.10⁻⁶ et 1.10⁻² parties en poids de la matière sèche en polymère organosiloxane à faire réagir.

Tout catalyseur susceptible d'initier une réaction de déshydrogéno-condensation pourra convenir. Par exemple, on peut utiliser un complexe du rhodium (RhCl₃ [(C₈H₁₇)₂S]₃) cité dans le brevet américain US-B-4,262,107, un complexe du platine tel que le catalyseur de Karstedt, les catalyseurs métalliques à base de platine, de rhodium, de palladium, de plutonium ou d'iridium. Comme catalyseur à base d'iridium on peut citer les composés suivants :
Ir Cl (CO) (TPP)₂, Ir (CO)₂ (acac) ;Ir H(Cl)₂ (TPP)₃ ;[Ir Cl (Cyclooctène)₂]₂
Ir I(CO)(TPP)₂ et Ir H(CO)(TPP)₃ formules dans lesquelles TPP signifie un groupement triphénylphosphine et acac un groupement acétylacétonate.

On peut aussi utiliser des catalyseurs d'alkali, d'amines, de nickel colloïdale ou le dilaurate de dibutylétain (voir l'ouvrage de NOLL « Chemistry and technology of silicones », page 205, Academic Press, 1968 - 2^{ème} édition). D'autres catalyseurs tels que des dérivés de bore de type tris (pentafluorophényl)borane sont décrits dans la demande de brevet français FR-A-2 806 930.

De manière préférée, le catalyseur de déshydrogéno-condensation (C) est choisi parmi le groupe constitué des composés suivants :
le dilaurate de dibutylétain, le catalyseur de Karstedt et le catalyseur d'iridium (complexe de Vaska) de formule (IV) suivante :

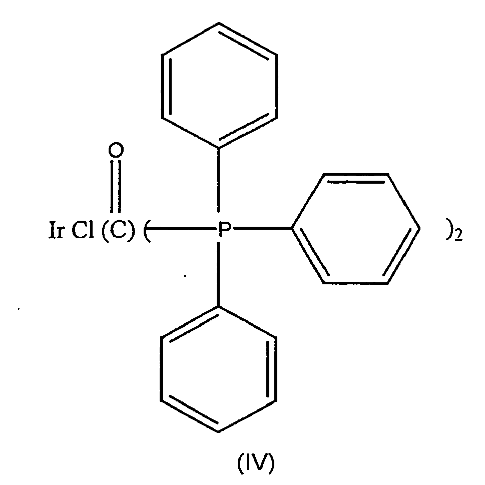

Selon un mode particulier de l'invention, lorsque le catalyseur de déshydrogéno-condensation (C) est à base d'étain ou de platine, les proportions des POS (A) et POS (B) sont déterminées de manière à ce que le ratio:
r¹= nombre de SiH du POS (A) / nombre de SiOH du POS (B)
soit compris entre 0,5 et 5 et de préférence entre 0,9 et 2,1.

Selon une caractéristique remarquable de l'invention, le sel électrolyte (D) est constitué :
- d'un cation choisi parmi le groupe constitué par les entités suivantes : les cations métalliques, les ions ammoniums, les ions amidiniums et les ions guanidiums ; et
- d'un anion choisi parmi le groupe constitué par les entités suivantes : les ions chlorures, les ions bromures, les ions iodures, les ions perchlorates, les ions thyocyanates, les ions tétrafluoroborates, les ions nitrates, AsF6⁻, PF6⁻, les ions stéarylsulfonates, les ions trifluorométhanesulfonates, les ions octylsulfonates, les ions dodécylbenzènesulfonates, R⁴SO₃⁻, (R⁴SO₂) (R⁵SO₂)N⁻ et (R⁴SO₂) (R⁵SO₂) (R⁶SO₂)C⁻, dans chaque formule les radicaux R⁴, R⁵ et R⁶ sont identiques ou différents et représentent des groupements électro-attracteurs.

D'une manière avantageuse, les radicaux R⁴, R⁵ et R⁶ sont choisis parmi des groupements électro-attracteurs de type perfluoroaryle ou perfluoroalkyle comprenant de 1 à 6 atomes de carbone.

Selon une variante de l'invention, le sel électrolyte (D) comprend un cation métallique choisi parmi les métaux alcalins et alcalino-terreux des groupes 1 et 2 de la classification périodique [Chem. & Eng. News, vol 63, n°5, 26 du 4 Février 1985]. En particulier, le cation métallique est soit de type lithium soit choisi parmi les métaux de transition, par exemple le manganèse, le fer, le cobalt, le nickel, le cuivre, le zinc, le calcium, le manganèse ou l'argent. Les sels électrolytes de type lithium utiles selon l'invention peuvent être choisis parmi le groupe constitué par les composés suivants :
LiClO₄, LiBF₄, LiPF₆, LiAsF₆, LiCF₃SO₃, LiN(CF₃SO₂)₂, Li(C₂F₅SO₂)₂ et un mélange de ces composés.

D'une manière préférentielle, la quantité de sel électrolyte de lithium de la composition est définie de façon à ce que le ratio molaire O/Li soit compris entre 15 et 40, préférentiellement entre 10 et 30 et encore plus préférentiellement compris entre 20 et 25.

Bien que l'électrolyte selon l'invention soit un polymère solide après réticulation et/ou polymérisation, l'enseignement de l'invention ne se limite pas au seul solide. En effet, on peut adjoindre à la composition un électrolyte organique (E) afin d'obtenir après réticulation et/ou polymérisation une forme liquide ou gélifiée. Le choix se portera de préférence sur les composés choisis parmi le groupe constitué du carbonate de propylène, carbonate d'éthylène, carbonate de diéthyle, carbonate de diméthyle, carbonate d'éthylméthyle, γ-butyrolactone, 1,3-dioxolane, diméthoxyéthane, tétrahydrofurane, diméthyl sulfoxide et polyéthylène glycol diméthyléther.

L'invention concerne également un électrolyte polymère pour batterie obtenu par polymérisation et/ou réticulation par voie de déshydrogéno-condensation de la composition polymérisable et/ou réticulable selon l'invention décrite ci-dessus. Ladite déshydrogéno-condensation peut être éventuellement initiée par thermoactivation du catalyseur (C). Suivant le type de catalyseur utilisé pour initier la réaction, il peut être nécessaire de chauffer le milieu réactionnel à des températures supérieures à 65°C. On utilisera de préférence des températures comprises entre 70 et 130°C. Le catalyseur (C) peut être mis en oeuvre tel quel ou en solution dans un solvant. Les solvants utilisables pour les catalyseurs sont très nombreux et variés et sont choisis selon le catalyseur utilisé et les autres constituants de la composition ainsi préparée. En général, les solvants peuvent être des alcools, des esters, des éthers, des cétones, l'eau à l'état de traces et les carbonates.

Les alcools couramment employés sont le para-tolyl-éthanol, l'isopropyl-benzyl-alcool, l'alcool benzylique, le méthanol, l'éthanol, le propanol, l'isopropanol et le butanol. Les éthers communément utilisés sont le méthoxy-2-éthanol, l'éthoxy-2-éthanol, le diéthylène-glycol, di-n-butyléther. Les esters usuels sont le dibutylmaléate, diméthyl-éthylmalonate, salicylate de méthyle, dioctyladipate, tartrate de butyle, lactate d'éthyle, lactate de n-butyle, lactate d'isopropyle. D'autres solvants utilisables entrant dans les autres catégories de solvants citées ci-dessus sont l'acétonitrile, le benzonitrile, l'acétone, le cyclohexanone, le toluène et le tétrahydrofurane.

La durée de réaction requise varie en fonction du type de catalyseur et la température utilisée pour la réaction.

La composition selon l'invention peut aussi comprendre des agents de renfort afin d'améliorer les propriétés mécaniques de l'électrolyte polymère obtenu après polymérisation et/ou réticulation. Par exemple, la composition selon l'invention pourra éventuellement comprendre de la silice traitée, de l'alumine traitée ou des résines polyorganosiloxanes.

Un autre objet de l'invention est une batterie comprenant l'électrolyte polymère obtenu par polymérisation et/ou réticulation décrit ci-dessus, placé entre une anode et une cathode. D'une manière avantageuse, au moins un des constituants de la cathode est choisi parmi le groupe constitué des entités suivantes :
lithium métallique, alliages de lithium, matériaux inorganiques comprenant des insertions de lithium et matériaux carbonatés comprenant des insertions de lithium.

L'application de ces batteries est particulièrement adaptée pour les domaines de stockage de l'électricité suivants : les alimentations de secours pour les systèmes industriels et de télécommunication, les alimentations secondaires des équipements portables, les batteries pour applications satellites géostationnaires et les batteries pour véhicule électrique et hybride

Les exemples suivants sont donnés à titre illustratif et ils ne peuvent être considérés comme une limite de la portée de l'invention.

### EXEMPLES

### Exemple 1 : Préparation des organohydrogénopolysiloxanes fonctionalisés par des groupements éther de polyoxyéthylènes POS (A1), POS (A2) et POS (A3):

### a) POS (A1) - schéma réactionnel :

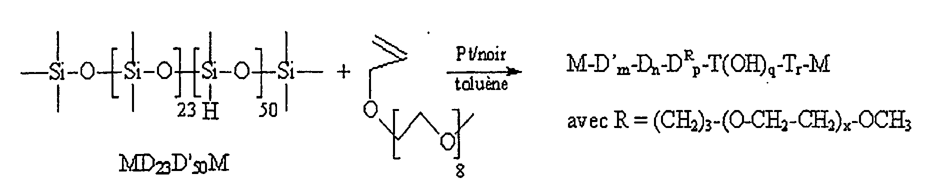

### Mode opératoire :

M = (CH₃)₃SiO_{1/2}; D = (CH₃)₂SiO_{2/2}, D'= (CH₃)SiHO_{2/2} ; D^{R} = (CH₃)Si(R)O_{2/2} ; T(OH) = (CH₃)Si(OH)O_{2/2} ; T = (CH₃)SiO_{3/2}; avec R = (CH₂)₃-(O-CH₂-CH₂)ₓ-OCH₃.

Dans un réacteur dé 1L muni d'une agitation de type impeller, d'un réfrigérant suivi d'un bulleur et d'une contre pâle (contenant la sonde de température), dans le pied de réacteur sont chargés 108,08 g de toluène et 7,00 g de Platine sur noir (soit 250 ppm par rapport à la masse réactionnelle). Le milieu réactionnel est ensuite porté à 80°C.
Une coulée de l'huile silicone MD₂₃D'₅₀M (159g soit 1,75 mole SiH) et de l'allyloxypolyéther (309g soit 0,73 mole) est alors réalisée en 2 heures à l'aide d'une ampoule de coulée contenant les deux produits ainsi que 106,6g de toluène. Cette réaction est effectuée à environ 80°C sous ciel d'azote et sous agitation mécanique. La réaction est considérée comme terminée quand le taux de transformation des SiH souhaité (40%) est atteint, le chauffage et l'agitation sont alors arrêtés.
Une filtration est ensuite réalisée dans un filtre en aluminium équipée d'une membrane en cellulose recouverte de terre diatomée sous pression d'azote. Après élimination des volatils sous pression réduite (environ 5 mBars) et à 150°C, une quantité de 322,36g est obtenue. Le produit obtenu POS (A1) a une répartition de masse en nombre Mn pst = 1050, de masse en poids Mw pst = 5190 et sa structure est la suivante :

M-D'ₘ-Dₙ-D^{R}ₚ-T(OH)_{q}-Tᵣ-M

avec R = (CH₂)₃-(O-CH₂-CH₂)ₓ-OCH₃

| | m | n | p | q | r | x | %mol OE greffé |
|---|---|---|---|---|---|---|---|
| POS (A1) | 22,4 | 23,5 | 20 | 2 | 8,8 | 8 | 78 |

### b) POS (A2) - schéma réactionnel

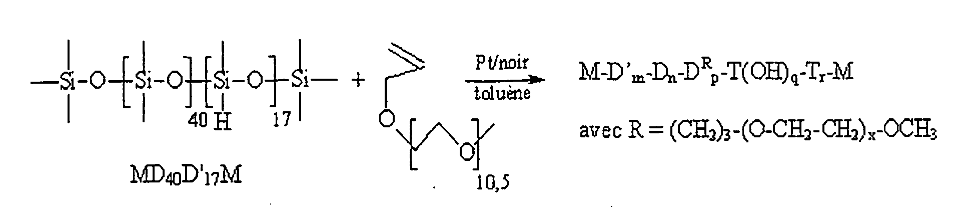

### Mode opératoire

Dans un réacteur de 1L muni d'une agitation de type impeller, d'un réfrigérant suivi d'un bulleur et d'une contre pâle (contenant la sonde de température), sont chargés dans le réacteur 249,9g de toluène et 2g de Platine sur noir (soit 100ppm par rapport à la masse réactionnelle). Le milieu réactionnel est ensuite porté à 80°C.
Une co-coulée de l'huile silicone (250,3g soit 1,03 mole de SiH) et de l'allyloxypolyéther (200,2g soit 0,37 mole) est alors réalisée en 2 heures à l'aide de pompe péristaltiques. Cette réaction est effectuée à environ 80°C sous ciel d'azote et sous agitation mécanique. La synthèse est considérée comme terminée lorsque le taux de transformation des SiH souhaité (33%) est atteint, le chauffage et l'agitation sont alors arrêtés.
Une filtration est alors réalisée dans un filtre en aluminium équipée d'une membrane en cellulose recouverte de primisil sous pression d'azote. Puis les volatils sont éliminés par distillation sous pression réduite (environ 5 mBar) et à 150°C. On obtient une masse de 605,4 g de POS (A2) contenant encore du toluène. La répartition des masses de ce produit est la suivante : Mn pst = 4950, Mw pst = 11500. La structure déterminée par RMN est la suivante pour le POS (A2):

M-D'ₘ-Dₙ-D^{R}ₚ-T(OH)_{q}-Tᵣ-M

avec R = (CH₂)₃-(O-CH₂-CH₂)ₓ-OCH₃

| | m | n | p | q | r | x | %mol greffé |
|---|---|---|---|---|---|---|---|
| POS (A2) | 9,7 | 46,6 | 6,1 | 1,4 | 0 | 10,5 | 84 |

### c) POS (A3) - schéma réactionnel :

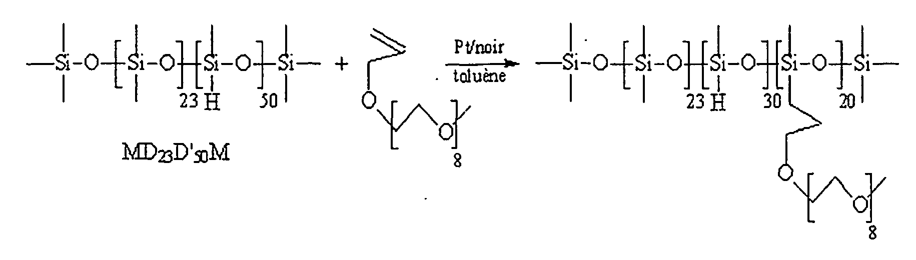

### Mode opératoire :

Dans un réacteur de 2L muni d'une agitation de type impeller, d'un réfrigérant suivi d'un bulleur et d'une contre pâle (contenant la sonde de température), sont ajoutés dans le réacteur 398,2g de xylène et 6,03g de Platine sur noir (soit 125 ppm par rapport à la masse réactionnelle). Le milieu réactionnel est ensuite porté à 80°C.
Une co-coulée de l'huile silicone (287,3g soit 2,93 moles SiH) et de l'allyloxypolyéther (502,1g soit 1,18 mole) est alors réalisée en 2 heures à l'aide de pompe péristaltiques. Cette réaction est effectuée à environ 80°C sous ciel d'azote et sous agitation mécanique.
La réaction est terminée lorsque le taux de transformation des SiH souhaité (40%) est atteint, le chauffage et l'agitation sont alors arrêtés. Le produit est filtré sur un filtre en aluminium équipée d'une membrane en cellulose recouverte de terre diatomée sous pression d'azote. L'élimination des volatils est effectuée par distillation sous pression réduite (environ 5 mBars) et à 150°C. La quantité de produit POS (A3) obtenu est de 665,4 g et la répartition des masses est la suivante :

| | |
|---|---|
| M n pst | 1840 |
| Mw pst | 3670 |

### Exemple 2 : préparation de l'électrolyte polymère

L'huile POS (B1) utilisée dans les compositions des exemples est la suivante : 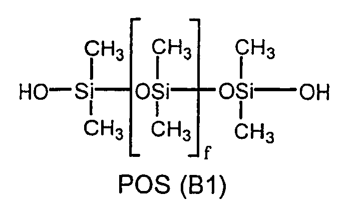 avec f=4.

On prépare les compositions selon l'invention en mélangeant au moyen d'une turbine :
a) 10 g d'un POS (A) préparé selon l'exemple 1,
b) une quantité variable de sel LiTFSi (LiTFSI = lithium bistrifluorométhanesulfonamide) ;
c) une quantité variable d'une huile POS (B1), et
d) 0,1 g de dilaurate de dibutylétain.

Le mélange est porté à 70°C et cette température est maintenue pendant 16h de manière à permettre la réticulation. Après refroidissement, l'électrolyte polymère sous forme de film est récupéré.
Les quantités exactes des différents composants sont consignées dans le Tableau 1 suivant :

**Tableau 1.**

| Electrolyte polymère préparé à partir de : | Quantité (g) de LiTFSi | Quantité (g) de POS (B1) |
|---|---|---|
| POS (A1) = Electrolyte E1 | 1,40 | 2,47 |
| POS (A2) = Electrolyte E2 | 1,47 | 3 |
| POS (A3) = Electrolyte E2 | 1,68 | 3 |

### Exemple 3 : Mesure de la conductivité ionique.

Les mesures de conductivité ionique des 3 électrolytes E1, E2 et E3 ainsi que leurs évolutions avec la température ont été réalisées via l'utilisation de la technique de spectrométrie d'impédance complexe, technique permettant de déterminer les grandeurs caractéristiques de systèmes conducteurs telles leur résistance ou leur capacité.
Le film d'électrolyte solide est inséré et maintenu fixe entre deux électrodes en acier inox, le tout constituant la cellule de mesure principale. Ce dispositif expérimental est positionné à l'intérieur d'une étuve permettant un balayage en températures compris entre -20 et +80°C. La cellule est reliée à un impédancemètre Hewlett Packard HD4192A couplé à un ordinateur pour l'enregistrement des données. La cellule est soumise à une tension sinusoïdale de 100 mV crête à crête dans un domaine de fréquences allant de 5.10⁻³ Hz à 13 MHz. Pour chaque échantillon, la mesure est réalisée après ¾ d'heure de maintien à la température de consigne. Dans ces conditions, les conductivités ioniques des électrolytes E1, E2 et E3 à 25°C, telles que mesurées par la méthode d'impédance complexe sont comprises entre 10⁻⁴ et 5x10⁻⁶ Siemens/cm.

## Revendications

1. Composition polymérisable et/ou réticulable par déshydrogéno-condensation pour électrolyte de batterie comprenant :
a) au moins un organohydrogénopolysiloxane (POS) (A) ayant, par molécule, au moins 2 atomes d'hydrogène directement liés aux atomes de silicium ;
b) au moins un organohydroxypolysiloxane (POS) (B) ayant, par molécule, au moins 2 groupements -OH directement liés aux atomes de silicium ;
c) une quantité efficace d'au moins un catalyseur de déshydrogéno-condensation (C) ; et
d) au moins un sel électrolyte (D) ;
avec comme condition supplémentaire que le POS (A) et/ou le POS (B) comporte(nt) par molécule au moins un motifs siloxyle comprenant au moins un groupement directement lié à un atome de silicium comprenant une fonction éther de polyoxyalkylène (Poa).

2. Composition polymérisable et/ou réticulable par déshydrogéno-condensation pour électrolyte de batterie selon la revendication 1 comprenant :
a) au moins un organohydrogénopolysiloxane (POS) (A) ayant, par molécule, au moins 2 atomes d'hydrogène directement liés aux atomes de silicium et au moins un groupement directement lié à un atome de silicium comprenant une fonction éther de polyoxyalkylène (Poa);
b) au moins un organohydroxypolysiloxane (POS) (B) ayant, par molécule, au moins 2 groupements -OH directement liés aux atomes de silicium ,
c) une quantité efficace d'au moins un catalyseur de déshydrogéno-condensation (C) ; et
d) au moins un sel électrolyte (D).

3. Composition polymérisable et/ou réticulable par déshydrogéno-condensation pour électrolyte de batterie selon l'une des revendications précédentes **caractérisée en ce que** la fonction éther de polyoxyalkylène (Poa) du (POS) (A) est de type éther de polyoxyéthylène et/ou éther de polyoxypropylène.

4. Composition polymérisable et/ou réticulable par déshydrogéno-condensation pour électrolyte de batterie selon l'une des revendications précédentes **caractérisée en ce que** le (POS) (A) est un copolymère essentiellement linéaire statistique, séquencé ou à bloc, de formule générale moyenne (I) suivante : 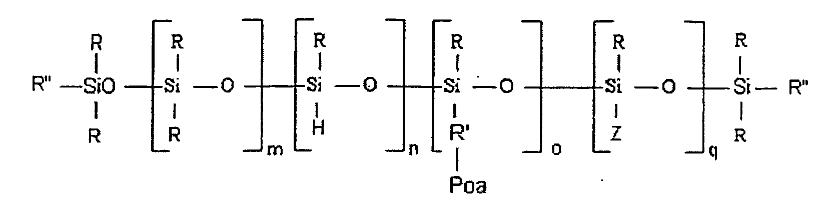 et pouvant éventuellement comporter des motifs de formule RSiO_{3/2} (T), formule dans laquelle :
- les symboles R', identiques ou différents entre eux, représentent chacun un radical comprenant de 2 à 50 atomes de carbone ;
- les symboles R et R", identiques ou différents entre eux, représentent chacun :
- un hydrogène, un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
- un radical cycloalkyle contenant entre 5 et 8 atomes de carbone cycliques, éventuellement substitué,
- un radical aryle contenant entre 6 et 12 atomes de carbone, éventuellement substitué, ou
- une partie aralkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alcoxyles contenant 1 à 3 atomes de carbone,
- les symboles Z, identiques ou différents entre eux, représentent chacun un radical hydroxyle ou alkoxyle,
- les symboles Poa, identiques ou différents entre eux, représentent chacun des groupements de type éther de polyoxyalkylène, de préférence éther de polyoxyéthylène et/ou éther de polyoxypropylène;
- m est un nombre entier ou fractionnaire supérieur ou égal à 0 ;
- n est un nombre entier ou fractionnaire supérieur ou égal à 2 et éventuellement peut-être égal à 0 avec comme condition que lorsque n est égal à 0 alors les deux groupements R" sont des atomes d'hydrogène ;
- o est un nombre entier ou fractionnaire supérieur ou égal à 1, et
- q est un nombre entier ou fractionnaire supérieur ou égal à 0

5. Composition polymérisable et/ou réticulable par déshydrogéno-condensation pour électrolyte de batterie selon la revendication 4 **caractérisée en ce que**:
- m et n sont compris entre 2 et 200 ;
- o est compris entre 1 et 50 ; et
- q est compris entre 0 et 10.

6. Composition polymérisable et/ou réticulable par déshydrogéno-condensation pour électrolyte de batterie selon la revendications 4 **caractérisée en ce que** les groupements (-R'-Poa) sont choisis parmi les groupements suivants:
-(CH₂)₃-O-(CH₂CH₂-O)ₘ-CH₃; -(CH₂)₂-O-(CH₂CH₂-O)ₘ-CH₃ ;
-(CH₂)₃-O-(CH(CH₃)-CH₂-O)ₘ-CH₃ et -(CH₂)₂-O-(CH(CH₃)-CH₂-O)ₘ-CH₃
avec m≤14.

7. Composition polymérisable et/ou réticulable par déshydrogéno-condensation pour électrolyte de batterie selon l'une des revendications 1 à 2 **caractérisée en ce que** le (POS) (B) est un copolymère essentiellement linéaire statistique, séquencé ou à bloc, de formule générale moyenne (II) suivante : 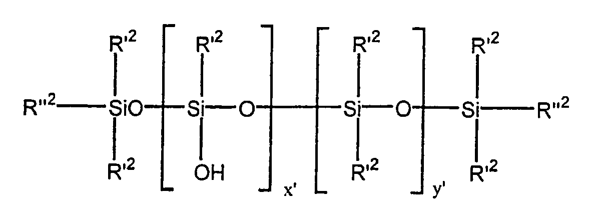 et pouvant éventuellement comporter des motifs de formule RSiO_{3/2} (T) formule dans laquelle :
- x' est un nombre entier ou fractionnaire supérieur ou égal à 2 et pouvant éventuellement être égal à 0 ;
- y' est un nombre entier ou fractionnaire supérieur ou égal à 0;
- les symboles R'² et R"², identiques ou différents entre eux, représentent chacun:
·un radical alkyle linéaire ou ramifié contenant 1 à 8 atomes de carbone, éventuellement substitué par au moins un halogène, de préférence le fluor, les radicaux alkyle étant de préférence méthyle, éthyle, propyle, octyle et 3,3,3-trifluoropropyle,
·un radical cycloalkyle contenant entre 5 et 8 atomes de carbone cycliques, éventuellement substitué,
·un radical aryle contenant entre 6 et 12 atomes de carbone éventuellement substitué, et/ou
·une partie aralkyle ayant une partie alkyle contenant entre 5 et 14 atomes de carbone et une partie aryle contenant entre 6 et 12 atomes de carbone, substituée éventuellement sur la partie aryle,
avec comme condition que lorsque x' = 0 alors les deux groupements R"² correspondent à -OH.

8. Composition polymérisable et/ou réticulable par déshydrogéno-condensation pour électrolyte de batterie selon l'une des revendications 1 à 2 et 7 **caractérisée en ce que** le (POS) (B) est un α,ω-bis (hydroxy)polydiméthylsiloxane de formule générale moyenne (III) suivante : 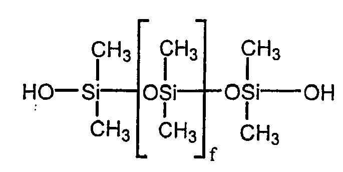 avec f supérieur ou égal à 0 et de préférence 0 ≤ f ≤ 200

9. Composition polymérisable et/ou réticulable par déshydrogéno-condensation pour électrolyte de batterie selon la revendication 1 ou 2 **caractérisé en ce que** le catalyseur de déshydrogéno-condensation (C) est un dérivé ou complexe métallique à base de platine, bore, rhodium, palladium, étain ou iridium.

10. Composition polymérisable et/ou réticulable par déshydrogéno-condensation pour électrolyte de batterie selon la revendication 9 **caractérisée en ce que** lorsque le catalyseur de déshydrogéno-condensation (C) est à base d'étain ou de platine, les proportions des POS (A) et (POS) (B) sont déterminées de manière à ce que le ratio r¹= nombre de SiH du POS (A) / nombre de SiOH du POS (B) soit compris entre 0,5 et 5 et de préférence entre 0,9 et 2,1.

11. Composition polymérisable et/ou réticulable par déshydrogéno-condensation pour électrolyte de batterie selon la revendication 9 **caractérisée en ce que** le catalyseur (C) est choisi parmi le groupe constitué des catalyseurs suivants :
le dilaurate de dibutylétain, le catalyseur de Karstedt et le catalyseur d'iridium de formule (IV) suivante :

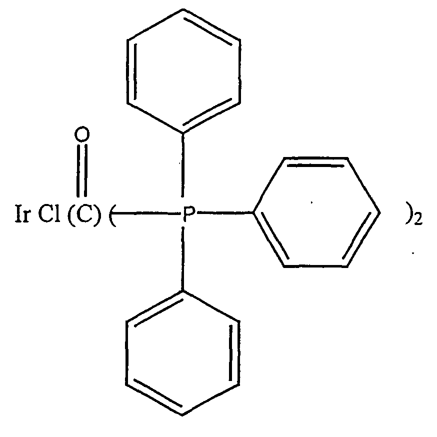

12. Composition polymérisable et/ou réticulable par déshydrogéno-condensation pour électrolyte de batterie selon la revendication 1 ou 2 **caractérisée en ce que** le sel électrolyte (D) est constitué :
- d'un cation choisi parmi le groupe constitué par les entités suivantes : les cations métalliques, les ions ammoniums, les ions amidiniums et les ions guanidiums ; et
- d'un anion choisi parmi le groupe constitué par les entités suivantes : les ions chlorures, les ions bromures, les ions iodures, les ions perchlorates, les ions thyocyanates, les ions tétrafluoroborates, les ions nitrates, AsF6⁻, PF6⁻, les ions stéarylsulfonates, les ions trifluorométhanesulfonates, les ions octylsulfonates, les ions dodécylbenzènesulfonates, R⁴SO₃⁻, (R⁴SO₂) (R⁵SO₂)N⁻ et (R⁴SO₂) (R⁵SO₂) (R⁶SO₂)C⁻, dans chaque formule les radicaux R⁴, R⁵ et R⁶ sont identiques ou différents et représentent des groupements électro-attracteurs.

13. Composition polymérisable et/ou réticulable par déshydrogéno-condensation pour électrolyte de batterie selon la revendication 12 **caractérisée en ce que** les radicaux R⁴, R⁵ et R⁶ sont des groupement électro-attracteurs de type perfluoroaryle ou perfluoroalkyle comprenant de 1 à 6 atomes de carbone.

14. Composition polymérisable et/ou réticulable par déshydrogéno-condensation pour électrolyte de batterie selon la revendication 12 **caractérisée en ce que** le sel électrolyte (D) comprend un cation métallique choisi parmi les métaux alcalins et alcalino-terreux des groupes 1 et 2 de la classification périodique [Chem. & Eng. News, vol 63, n°5, 26 du 4 Février 1985].

15. Composition polymérisable et/ou réticulable par déshydrogéno-condensation pour électrolyte de batterie selon la revendication 14 **caractérisée en ce que** le sel électrolyte (D) comprend un cation métallique de type lithium.

16. Composition polymérisable et/ou réticulable par déshydrogéno-condensation pour électrolyte de batterie selon la revendication 15 **caractérisée en ce que** la quantité du sel électrolyte (D) est déterminée de manière à ce que le ratio molaire O/Li soit compris entre 15 et 40 et de préférence compris entre 20 et 25.

17. Composition polymérisable et/ou réticulable par déshydrogéno-condensation pour électrolyte de batterie selon les revendications 1, 2, 15 ou 16 **caractérisée en ce que** le sel électrolyte (D) est choisi parmi le groupe constitué par les composés suivants :
LiClO₄, LiBF₄, LiPF₆, LiAsF₆, LiCF₃SO₃, LiN(CF₃SO₂)₂, Li(C₂F₅SO₂)₂ et un mélange de ces composés.

18. Composition polymérisable et/ou réticulable par déshydrogéno-condensation pour électrolyte de batterie selon la revendication 12 **caractérisée en ce que** le cation métallique est choisi parmi les métaux de transition.

19. Composition polymérisable et/ou réticulable par déshydrogéno-condensation pour électrolyte de batterie selon la revendication 18 **caractérisée en ce que** le cation métallique est choisi parmi le groupe constitué du manganèse, fer, cobalt, nickel, cuivre, zinc, calcium, manganèse et argent.

20. Composition polymérisable et/ou réticulable par déshydrogéno-condensation pour électrolyte de batterie selon l'une des revendications précédentes **caractérisée en ce qu'**elle comprend un électrolyte organique (E).

21. Composition polymérisable et/ou réticulable par déshydrogéno-condensation pour électrolyte de batterie selon la revendication 20 **caractérisée en ce que** l'électrolyte organique (E) est choisi parmi le groupe constitué des composés suivants :
carbonate de propylène, carbonate d'éthylène, carbonate de diéthyle, carbonate de diméthyle, carbonate d'éthylméthyle, γ-butyrolactone, 1,3-dioxolane, diméthoxyéthane, tétrahydrofurane, diméthyl sulfoxide et polyéthylèneglycol diméthyléther.

22. Un électrolyte polymère pour batterie obtenu par polymérisation et/ou réticulation par voie de déshydrogéno-condensation, éventuellement activée thermiquement, d'une composition polymérisable et/ou réticulable selon l'une des revendications 1 à 21.

23. Une batterie polymère comprenant un électrolyte polymère selon la revendication 22 disposé entre une anode et une cathode.

24. Une batterie polymère selon la revendication 22 **caractérisée en ce qu'**au moins un des constituants de la cathode est choisi parmi le groupe constitué des composés suivants :
lithium métallique, alliages de lithium, matériaux inorganiques comprenant des insertions de lithium et matériaux carbonatés comprenant des insertions de lithium.

25. Utilisation d'une batterie polymère selon la revendication 23 ou 24 dans un satellite géostationnaire ou un véhicule électrique et hybride

## Claims

1. Composition which can be polymerized and/or crosslinked by dehydrocondensation for a battery electrolyte comprising:
a) at least one organohydropolysiloxane (POS) (A) having, per molecule, at least 2 hydrogen atoms directly bonded to silicon atoms;
b) at least one organohydroxypolysiloxane (POS) (B) having, per molecule, at least 2 -OH groups directly bonded to silicon atoms;
c) an effective amount of at least one dehydrocondensation catalyst (C); and
d) at least one electrolyte salt (D);
with the additional condition that the POS (A) and/or the POS (B) comprise(s), per molecule, at least one siloxyl unit comprising at least one group directly bonded to a silicon atom comprising a polyoxyalkylene (Poa) ether functional group.

2. Composition which can be polymerized and/or crosslinked by dehydrocondensation for a battery electrolyte according to Claim 1, comprising:
a) at least one organohydropolysiloxane (POS) (A) having, per molecule, at least 2 hydrogen atoms directly bonded to silicon atoms and at least one group directly bonded to a silicon atom comprising a polyoxyalkylene (Poa) ether functional group;
b) at least one organohydroxypolysiloxane (POS) (B) having, per molecule, at least 2 -OH groups directly bonded to silicon atoms,
c) an effective amount of at least one dehydrocondensation catalyst (C); and
d) at least one electrolyte salt (D).

3. Composition which can be polymerized and/or crosslinked by dehydrocondensation for a battery electrolyte according to either of the preceding claims, **characterized in that** the polyoxyalkylene (Poa) ether functional group of the POS (A) is of polyoxyethylene ether and/or polyoxypropylene ether type.

4. Composition which can be polymerized and/or crosslinked by dehydrocondensation for a battery electrolyte according to one of the preceding claims, **characterized in that** the POS (A) is an essentially linear random or block copolymer of following mean general formula (I): 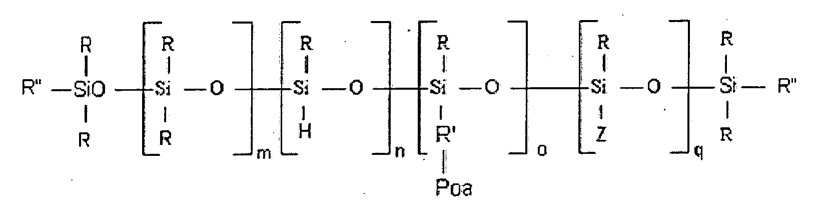 which can optionally comprise units of formula RSiO_{3/2} (T),
in which formula:
- the R' symbols, which are identical to or different from one another, each represent a radical comprising from 2 to 50 carbon atoms;
- the R and R" symbols, which are identical to or different from one another, each represent:
- a hydrogen or a linear or branched alkyl radical comprising 1 to 8 carbon atoms which is optionally substituted by at least one halogen, preferably fluorine, the alkyl radicals preferably being methyl, ethyl, propyl, octyl and 3,3,3-trifluoropropyl,
- an optionally substituted cycloalkyl radical comprising between 5 and 8 cyclic carbon atoms,
- an optionally substituted aryl radical comprising between 6 and 12 carbon atoms, or
- an aralkyl radical having an alkyl part comprising between 5 and 14 carbon atoms and an aryl part comprising between 6 and 12 carbon atoms which is optionally substituted on the aryl part by halogens, alkyls and/or alkoxyls comprising 1 to 3 carbon atoms,
- the Z symbols, which are identical to or different from one another, each represent a hydroxyl or alkoxyl radical,
- the Poa symbols, which are identical to or different from one another, each represent groups of polyoxyalkylene ether type, preferably of polyoxyethylene and/or polyoxypropylene ether type;
- m is an integer or fractional number greater than or equal to 0;
- n is an integer or fractional number greater than or equal to 2 and can optionally be equal to 0, with the condition that, when n is equal to 0, then the two R" groups are hydrogen atoms;
- o is an integer or fractional number greater than or equal to 1, and
- q is an integer or fractional number greater than or equal to 0

5. Composition which can be polymerized and/or crosslinked by dehydrocondensation for a battery electrolyte according to Claim 4, **characterized in that**:
- m and n are between 2 and 200;
- o is between 1 and 50; and
- q is between 0 and 10.

6. Composition which can be polymerized and/or crosslinked by dehydrocondensation for a battery electrolyte according to Claim 4, **characterized in that** the -R'-Poa groups are chosen from the following groups:
- (CH₂)₃-O-(CH₂CH₂-O)ₘ-CH₃; - (CH₂)₂-O-(CH₂CH₂-O)ₘ-CH₃;
-(CH₂)₃-O-(CH(CH₃)-CH₂₋-O)ₘ-CH₃ and - (CH₂)₂-O-(CH (CH₃) -CH₂-O)ₘ-CH₃
with m≤14.

7. Composition which can be polymerized and/or crosslinked by dehydrocondensation for a battery electrolyte according to either of Claims 1 and 2, **characterized in that** the POS (B) is an essentially linear random or block copolymer of following mean general formula (II): 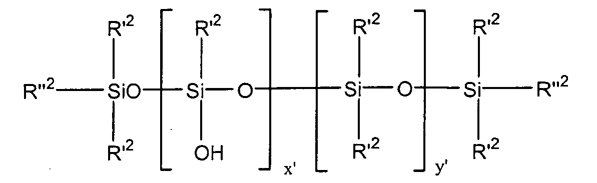 which can optionally comprise units of formula RSiO_{3/2} (T),
in which formula:
- x' is an integer or fractional number greater than or equal to 2 which can optionally be equal to 0;
- y' is an integer or fractional number greater than or equal to 0;
- the R'² and R''² symbols, which are identical to or different from one another, each represent:
· a linear or branched alkyl radical comprising 1 to 8 carbon atoms which is optionally substituted by at least one halogen, preferably fluorine, the alkyl radicals preferably being methyl, ethyl, propyl, octyl and 3,3,3-trifluoropropyl,
an optionally substituted cycloalkyl radical comprising between 5 and 8 cyclic carbon atoms,
· an optionally substituted aryl radical comprising between 6 and 12 carbon atoms, and/or
an aralkyl radical having an alkyl part comprising between 5 and 14 carbon atoms and an aryl part comprising between 6 and 12 carbon atoms which is optionally substituted on an aryl part, with the condition that, when x' = 0, then the two R''² groups correspond to -OH.

8. Composition which can be polymerized and/or crosslinked by dehydrocondensation for a battery electrolyte according to one of Claims 1, 2 and 7, **characterized in that** the POS (B) is an α,ω-bis(hydroxy)polydimethylsiloxane of following mean general formula (III): 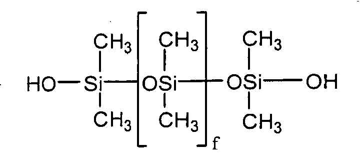 with f greater than or equal to 0 and preferably 0 ≤ f ≤ 200.

9. Composition which can be polymerized and/or crosslinked by dehydrocondensation for a battery electrolyte according to Claim 1 or 2, **characterized in that** the dehydrocondensation catalyst (C) is a metal complex or derivative based on platinum, boron, rhodium, palladium, tin or iridium.

10. Composition which can be polymerized and/or crosslinked by dehydrocondensation for a battery electrolyte according to Claim 9, **characterized in that**, when the dehydrocondensation catalyst (C) is based on tin or on platinum, the proportions of the POS (A) and of the POS (B) are determined so that the ratio r¹= number of SiH units of the POS (A)/number of SiOH units of the POS (B) is between 0.5 and 5 and preferably between 0.9 and 2.1.

11. Composition which can be polymerized and/or crosslinked by dehydrocondensation for a battery electrolyte according to Claim 9, **characterized in that** the catalyst (C) is chosen from the group consisting of the following catalysts:
dibutyltin dilaurate, a Karstedt catalyst and the iridium catalyst of following formula (IV):

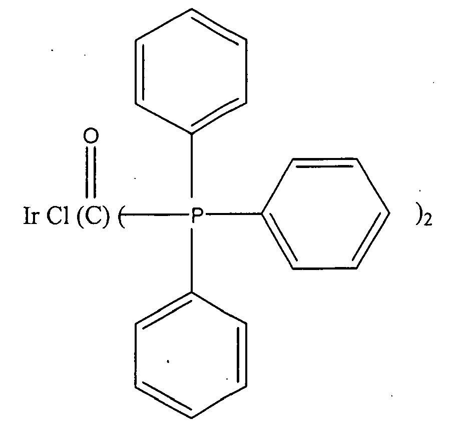

12. Composition which can be polymerized and/or crosslinked by dehydrocondensation for a battery electrolyte according to Claim 1 or 2, **characterized in that** the electrolyte salt (D) is composed:
- of a cation chosen from the group consisting of the following entities: metal cations, ammonium ions, amidinium ions and guanidinium ions; and
- of an anion chosen from the group consisting of the following entities: chloride ions, bromide ions, iodide ions, perchlorate ions, thiocyanate ions, tetrafluoroborate ions, nitrate ions, AsF6⁻, PF6⁻, stearylsulfonate ions, trifluoromethanesulfonate ions, octylsulfonate ions, dodecylbenzenesulfonate ions, R⁴SO₃⁻, (R⁴SO₂) (R⁵SO₂) N⁻ and (R⁴SO₂) (R⁵SO₂) (R⁶SO₂)C⁻, in each formula, the R⁴, R⁵ and R⁶ radicals are identical or different and represent electron-withdrawing groups.

13. Composition which can be polymerized and/or crosslinked by dehydrocondensation for a battery electrolyte according to Claim 12, **characterized in that** the R⁴, R⁵ and R⁶ radicals are electron-withdrawing groups of perfluoroaryl or perfluoroalkyl type, the perfluoroalkyl group comprising from 1 to 6 carbon atoms.

14. Composition which can be polymerized and/or crosslinked by dehydrocondensation for a battery electrolyte according to Claim 12, **characterized in that** the electrolyte salt (D) comprises a metal cation chosen from the alkali metals and alkaline earth metals of Groups 1 and 2 of the Periodic Table [Chem. & Eng. News, vol. 63, No. 5, 26, of February 4, 1985].

15. Composition which can be polymerized and/or crosslinked by dehydrocondensation for a battery electrolyte according to Claim 14, **characterized in that** the electrolyte salt (D) comprises a metal cation of lithium type.

16. Composition which can be polymerized and/or crosslinked by dehydrocondensation for a battery electrolyte according to Claim 15, **characterized in that** the amount of the electrolyte salt (D) is determined so that the O/Li molar ratio is between 15 and 40 and preferably between 20 and 25.

17. Composition which can be polymerized and/or crosslinked by dehydrocondensation for a battery electrolyte according to Claims 1, 2, 15 or 16, **characterized in that** the electrolyte salt (D) is chosen from the group consisting of the following compounds:
LiClO₄, LiBF₄, LiPF₆, LiAsF₆, LiCF₃SO₃, LiN(CF₃SO₂)₂, LiN(C₂F₅SO₂)₂ and a mixture of these compounds.

18. Composition which can be polymerized and/or crosslinked by dehydrocondensation for a battery electrolyte according to Claim 12, **characterized in that** the metal cation is chosen from transition metals.

19. Composition which can be polymerized and/or crosslinked by dehydrocondensation for a battery electrolyte according to Claim 18, **characterized in that** the metal cation is chosen from the group consisting of manganese, iron, cobalt, nickel, copper, zinc, calcium and silver.

20. Composition which can be polymerized and/or crosslinked by dehydrocondensation for a battery electrolyte according to one of the preceding claims, **characterized in that** it comprises an organic electrolyte (E).

21. Composition which can be polymerized and/or crosslinked by dehydrocondensation for a battery electrolyte according to Claim 20, **characterized in that** the organic electrolyte (E) is chosen from the group consisting of the following compounds:
propylene carbonate, ethylene carbonate, diethyl carbonate, dimethyl carbonate, ethyl methyl carbonate, γ-butyrolactone, 1,3-dioxolane, dimethoxyethane, tetrahydrofuran, dimethyl sulfoxide and polyethylene glycol dimethyl ether.

22. Polymer electrolyte for a battery obtained by polymerization and/or crosslinking by the dehydrocondensation route, which dehydrocondensation is optionally thermally activated, of a polymerizable and/or crosslinkable composition according to one of Claims 1 to 21.

23. Polymer battery comprising a polymer electrolyte according to Claim 22 positioned between an anode and a cathode.

24. Polymer battery according to Claim 23, **characterized in that** at least one of the constituents of the cathode is chosen from the group consisting of the following entities:
lithium metal, lithium alloys, inorganic materials comprising lithium insertions and carbonate materials comprising lithium insertions.

25. Use of a polymer battery according to Claim 23 or 24 in a geostationary satellite or a hybrid electric vehicle.

## Patentansprüche

1. Zusammensetzung für Batterie-Elektrolyten, polymerisierbar und/oder vernetzbar durch Dehydrogenokondensation, umfassend
a) mindestens ein Organohydrogenpolysiloxan (POS) (A) mit mindestens 2 Wasserstoffatomen pro Molekül, direkt gebunden an die Siliciumatome;
b) mindestens ein Organohydroxypolysiloxan (POS) (B) mit mindestens 2 Gruppen -OH pro Molekül, direkt gebunden an die Siliciumatome;
c) eine wirksame Menge von mindestens einem Katalysator der Dehydrogenokondensation (C); und
d) mindestens ein Elektrolyt-Salz (D);
unter der zusätzlichen Bedingung, dass das POS (A) und/oder das POS (B) pro Molekül mindestens eine Struktureinheit Siloxyl umfasst(en), enthaltend mindestens eine direkt an ein Siliciumatom gebundene Gruppe, die eine Etherfunktion von Polyoxyalkylen (Poa) umfasst.

2. Zusammensetzung für Batterie-Elektrolyten, polymerisierbar und/oder vernetzbar durch Dehydrogenokondensation, nach Anspruch 1, umfassend
a) mindestens ein Organohydrogenpolysiloxan (POS) (A) mit mindestens 2 Wasserstoffatomen pro Molekül, direkt gebunden an die Siliciumatome, und mindestens eine Gruppe, direkt gebunden an ein Siliciumatom, die eine Etherfunktion von Polyoxyalkylen (Poa) umfasst;
b) mindestens ein Organohydroxypolysiloxan (POS) (B) mit mindestens 2 Gruppen -OH pro Molekül, direkt gebunden an die Siliciumatome;
c) eine wirksame Menge von mindestens einem Katalysator der Dehydrogenokondensation (C); und
d) mindestens ein Elektrolyt-Salz (D).

3. Zusammensetzung für Batterie-Elektrolyten, polymerisierbar und/oder vernetzbar durch Dehydrogenokondensation, nach einem der vorstehenden Ansprüche, **dadurch gekennzeichnet, dass** die Etherfunktion von Polyoxyalkylen (Poa) des POS (A) vom Typ Polyoxyethylen-Ether und/oder Polyoxypropylen-Ether ist.

4. Zusammensetzung für Batterie-Elektrolyten, polymerisierbar und/oder vernetzbar durch Dehydrogenokondensation, nach einem der vorstehenden Ansprüche, **dadurch gekennzeichnet, dass** das POS (A) ein Copolymer ist, im wesentlichen statistisch linear, in Sequenzen oder im Block, der folgenden mittleren allgemeinen Formel (I) 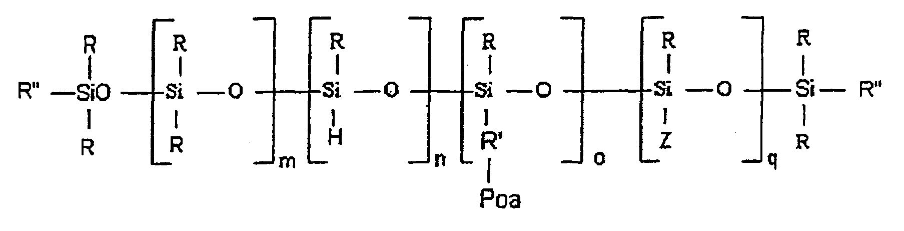 und das gegebenenfalls Struktureinheiten der Formel RSiO_{3/2} (T) umfassen kann, wobei in der Formel
- die Symbole R', untereinander gleich oder verschieden, jeweils einen Rest mit 2 bis 50 Kohlenstoffatomen darstellen;
- die Symbole R und R", untereinander gleich oder verschieden, jeweils darstellen:
- ein Wasserstoff, einen linearen oder verzweigte Rest Alkyl mit 1 bis 8 Kohlenstoffatomen, gegebenenfalls substituiert durch mindestens ein Halogen, vorzugsweise Fluor, wobei die Reste Alkyl vorzugsweise Methyl, Ethyl, Propyl, Octyl und 3,3,3-Trifluorpropyl sind,
- einen Rest Cycloalkyl, enthaltend zwischen 5 und 8 zyklische Kohlenstoffatome, gegebenenfalls substituiert,
- einen Rest Aryl, enthaltend zwischen 6 und 12 Kohlenstoffatome, gegebenenfalls substituiert, oder
- einen Teil Aralkyl mit einem Teil Alkyl, enthaltend zwischen 5 und 14 Kohlenstoffatome, und einen Teil Aryl, enthaltend zwischen 6 und 12 Kohlenstoffatome, gegebenenfalls substituiert an dem Teil Aryl durch Halogene, Alkyle und/oder Alkoxyle mit 1 bis 3 Kohlenstoffatomen,
- die Symbole Z, untereinander gleich oder verschieden, jeweils einen Rest Hydroxyl oder Alkoxyl darstellen,
- die Symbole Poa, untereinander gleich oder verschieden, jeweils Gruppen vom Typ Polyoxyalkylen-Ether, vorzugsweise Polyoxyethylen-Ether und/oder Polyoxypropylen-Ether darstellen;
- m eine ganze oder gebrochene Zahl von über oder gleich 0 ist;
- n eine ganze oder gebrochene Zahl von über oder gleich 2 ist und gegebenenfalls gleich 0 sein kann, unter der Bedingung, dass in dem Fall, wo n gleich 0 ist, dann die zwei Gruppen R" Wasserstoffatome sind;
- o eine ganze oder gebrochene Zahl von über oder gleich 1 ist; und
- q eine ganze oder gebrochene Zahl von über oder gleich 0 ist.

5. Zusammensetzung für Batterie-Elektrolyten, polymerisierbar und/oder vernetzbar durch Dehydrogenokondensation, nach Anspruch 4, **dadurch gekennzeichnet, dass**
- m und n zwischen einschließlich 2 und 200 betragen;
- o zwischen einschließlich 1 und 50 beträgt; und
- q zwischen einschließlich 0 und 10 beträgt.

6. Zusammensetzung für Batterie-Elektrolyten, polymerisierbar und/oder vernetzbar durch Dehydrogenokondensation, nach Anspruch 4, **dadurch gekennzeichnet, dass** die Gruppen (-R'-Poa) unter den folgenden Gruppen ausgewählt werden:
-(CH₂)₃-O-(CH₂CH₂-O)ₘ-CH₃ ; -(CH₂)₂-O-(CH₂CH₂-O)ₘ-CH₃ ;
-(CH₂)₃-O-(CH(CH₃)-CH₂₋-O)ₘ-CH₃ -(CH₂)₂-O-(CH(CH₃)-CH₂-O)ₘ-CH₃
und
mit m ≤ 14.

7. Zusammensetzung für Batterie-Elektrolyten, polymerisierbar und/oder vernetzbar durch Dehydrogenokondensation, nach einem der Ansprüche 1 bis 2, **dadurch gekennzeichnet, dass** das POS (B) ein Copolymer ist, im wesentlichen statistisch linear, in Sequenzen oder im Block, der folgenden mittleren allgemeinen Formel (II) 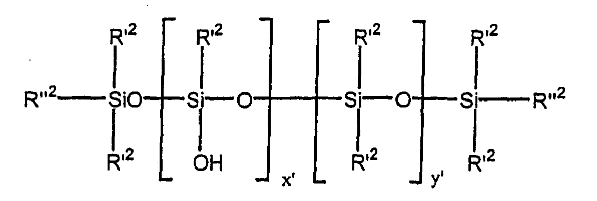 und das gegebenenfalls Struktureinheiten der Formel RSiO_{3/2} (T) umfassen kann, wobei in der Formel
- x' eine ganze oder gebrochene Zahl von über oder gleich 2 ist, und gegebenenfalls gleich 0 sein kann;
- y' eine ganze oder gebrochene Zahl von über oder gleich 0 ist,
- die Symbole R'² und R''², untereinander gleich oder verschieden, jeweils darstellen:
- einen linearen oder verzweigten Rest Alkyl mit 1 bis 8 Kohlenstoffatomen, gegebenenfalls substituiert durch mindestens ein Halogen, vorzugsweise Fluor, wobei die Reste Alkyl vorzugsweise Methyl, Ethyl, Propyl, Octyl und 3,3,3-Trifluorpropyl sind,
- einen Rest Cycloalkyl, enthaltend zwischen 5 und 8 zyklische Kohlenstoffatome, gegebenenfalls substituiert,
- einen Rest Aryl, enthaltend zwischen 6 und 12 Kohlenstoffatome, gegebenenfalls substituiert, und/oder
- einen Teil Aralkyl mit einem Teil Alkyl, enthaltend zwischen 5 und 14 Kohlenstoffatome, und einen Teil Aryl, enthaltend zwischen 6 und 12 Kohlenstoffatome, gegebenenfalls substituiert an dem Teil Aryl,
unter der Bedingung, dass in dem Fall, wo x' = 0 ist, dann die zwei Gruppen R"² -OH entsprechen.

8. Zusammensetzung für Batterie-Elektrolyten, polymerisierbar und/oder vernetzbar durch Dehydrogenokondensation, nach einem der Ansprüche 1 bis 2 und 7, **dadurch gekennzeichnet, dass** das POS (B) ein α,ω-Bis-(Hydroxy)-polydimethylsiloxan der folgenden mittleren allgemeinen Formel ist: 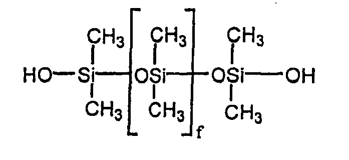 mit f über oder gleich 0 und vorzugsweise 0 ≤ f ≤ 200.

9. Zusammensetzung für Batterie-Elektrolyten, polymerisierbar und/oder vernetzbar durch Dehydrogenokondensation, nach Anspruch 1 oder 2, **dadurch gekennzeichnet, dass** der Katalysator der Dehydrogenokondensation (C) ein Derivat oder ein metallischer Komplex auf der Basis von Platin, Bor, Rhodium, Palladium, Zinn oder Iridium ist.

10. Zusammensetzung für Batterie-Elektrolyten, polymerisierbar und/oder vernetzbar durch Dehydrogenokondensation, nach Anspruch 9, **dadurch gekennzeichnet, dass** in dem Fall, wo der Katalysator der Dehydrogenokondensation (C) auf der Basis von Zinn oder Platin besteht, die Anteile von POS (A) und POS (B) in der Weise bestimmt werden, dass das Verhältnis r¹ = Anzahl von SiH des POS(A) / Anzahl von SiOH des POS(B) zwischen einschließlich 0,5 und 5 und vorzugsweise zwischen 0,9 und 2,1 beträgt.

11. Zusammensetzung für Batterie-Elektrolyten, polymerisierbar und/oder vernetzbar durch Dehydrogenokondensation, nach Anspruch 9, **dadurch gekennzeichnet, dass** der Katalysator (C) aus der Gruppe gewählt wird, die aus den folgenden Katalysatoren besteht: Dibutylzinn-dilaurat, Karstedt-Katalysator und Iridium-Katalysator der folgenden Formel (IV):

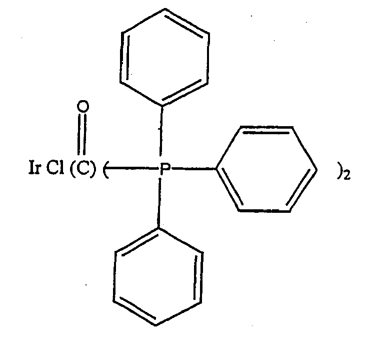

12. Zusammensetzung für Batterie-Elektrolyten, polymerisierbar und/oder vernetzbar durch Dehydrogenokondensation, nach Anspruch 1 oder 2, **dadurch gekennzeichnet, dass** das Elektrolyt-Salz (D) besteht aus:
- einem Kation, gewählt aus der Gruppe, die gebildet wird durch die folgenden Einheiten: die metallischen Kationen, die Ammonium-Ionen, die Amidinium-Ionen und die Guanidinium-Ionen; und
- einem Anion, gewählt aus der Gruppe, die gebildet wird durch die folgenden Einheiten: die Chlorid-Ionen, die Bromid-Ionen, die Iodid-Ionen, die Perchlorat-Ionen, die Thiocyanat-Ionen, die Tetrafluorborat-Ionen, die Nitrat-Ionen, AsF6⁻, PF6⁻, die Stearylsulfonat-Ionen, die Trifluormethansulfonat-Ionen, die Octylsulfonat-Ionen, die Dodecylbenzolsulfonat-Ionen, R⁴SO₃⁻, (R⁴SO₂) (R⁵SO₂)N⁻ und (R⁴SO₂) (R⁵SO₂) (R⁶SO₂)C⁻, wobei in jeder Formel die Reste R⁴, R⁵ und R⁶ gleich oder verschieden sind und Elektronen anziehende Gruppen darstellen.

13. Zusammensetzung für Batterie-Elektrolyten, polymerisierbar und/oder vernetzbar durch Dehydrogenokondensation, nach Anspruch 12, **dadurch gekennzeichnet, dass** die Reste R⁴, R⁵ und R⁶ Elektronen anziehende Gruppen vom Typ Perfluoraryl oder Perfluoralkyl darstellen, umfassend 1 bis 6 Kohlenstoffatome.

14. Zusammensetzung für Batterie-Elektrolyten, polymerisierbar und/oder vernetzbar durch Dehydrogenokondensation, nach Anspruch 12, **dadurch gekennzeichnet, dass** das Elektrolyt-Salz (D) ein metallisches Kation umfasst, ausgewählt unter den Alkalimetallen und den Erdalkalimetallen der Gruppen 1 und 2 des Periodensystems [Chem. & Eng. News, vol 63, N°5, 26 vom 4. Februar 1985].

15. Zusammensetzung für Batterie-Elektrolyten, polymerisierbar und/oder vernetzbar durch Dehydrogenokondensation, nach Anspruch 14, **dadurch gekennzeichnet, dass** das Elektrolyt-Salz (D) ein metallisches Kation vom Typ Lithium umfasst.

16. Zusammensetzung für Batterie-Elektrolyten, polymerisierbar und/oder vernetzbar durch Dehydrogenokondensation, nach Anspruch 15, **dadurch gekennzeichnet, dass** die Menge des Elektrolyt-Salzes (D) in der Weise bestimmt wird, dass das molare Verhältnis O/Li zwischen einschließlich 15 und 40 und vorzugsweise zwischen einschließlich 20 und 25 beträgt.

17. Zusammensetzung für Batterie-Elektrolyten, polymerisierbar und/oder vernetzbar durch Dehydrogenokondensation, nach Anspruch 1, 2, 15 oder 16, **dadurch gekennzeichnet, dass** das Elektrolyt-Salz (D) aus der Gruppe gewählt wird, die aus den folgenden Verbindungen besteht: LiClO₄, LiBF₄, LiPF₆, LiAsF₆, LiCF₃SO₃, LiN(CF₃SO₂)₂, Li(C₂F₅SO₂)₂ und einer Mischung dieser Verbindungen.

18. Zusammensetzung für Batterie-Elektrolyten, polymerisierbar und/oder vernetzbar durch Dehydrogenokondensation, nach Anspruch 12, **dadurch gekennzeichnet, dass** das metallische Kation unter den Übergangsmetallen ausgewählt wird.

19. Zusammensetzung für Batterie-Elektrolyten, polymerisierbar und/oder vernetzbar durch Dehydrogenokondensation, nach Anspruch 18, **dadurch gekennzeichnet, dass** das metallische Kation aus der Gruppe gewählt wird, die aus Mangan, Eisen, Cobalt, Nickel, Kupfer, Zink, Calcium, Mangan und Silber besteht.

20. Zusammensetzung für Batterie-Elektrolyten, polymerisierbar und/oder vernetzbar durch Dehydrogenokondensation, nach einem der vorstehenden Ansprüche, **dadurch gekennzeichnet, dass** sie einen organischen Elektrolyten (E) umfasst.

21. Zusammensetzung für Batterie-Elektrolyten, polymerisierbar und/oder vernetzbar durch Dehydrogenokondensation, nach Anspruch 20, **dadurch gekennzeichnet, dass** der organische Elektrolyt (E) aus der Gruppe gewählt wird, die aus den folgenden Verbindungen besteht: Propylencarbonat, Ethylencarbonat, Diethylcarbonat, Dimethylcarbonat, Ethylmethylcarbonat, γ-Butyrolacton, 1,3-Dioxolan, Dimethoxyethan, Tetrahydrofuran, Dimethylsulfoxid und Polyethylenglycol-dimethylether.

22. Polymer-Elektrolyt für Batterien, erhalten durch Polymerisation und/oder Vernetzung auf dem Wege der Dehydrogenokondensation, gegebenenfalls thermisch aktiviert, von einer polymerisierbaren und/oder vernetzbaren Zusammensetzung nach einem der Ansprüche 1 bis 21.

23. Polymer-Batterie, umfassend einen Polymer-Elektrolyten nach Anspruch 22, der zwischen einer Anode und einer Kathode angeordnet ist.

24. Polymer-Batterie nach Anspruch 22, **dadurch gekennzeichnet, dass** mindestens einer der Bestandteile der Kathode aus der Gruppe gewählt wird, die aus den folgenden Verbindungen besteht: metallisches Lithium, Lithium-Legierungen, anorganische Materialien, umfassend Insertionen von Lithium, und Carbonat-Materialien, umfassend Insertionen von Lithium.

25. Verwendung einer Polymer-Batterie nach Anspruch 23 oder 24 in einem geostationären Satellit oder einem elektrischen und HybridFahrzeug.
